# EUROPEAN PATENT APPLICATION

(11) **EP 4 303 191 A1**
(43) Date of publication of application: **10.01.2024**
(21) Application number: 22306031.0
(22) Date of filing: 08.07.2022
(51) Int. Cl.: C02F 1/44, C02F 1/04, C02F 1/469, C02F 1/66, C02F 103/08, C02F 103/02

(54) **PROCESS FOR PREPARING CUSTOMIZED MINERAL WATER**

(71) Applicant: SEVENTEEN ZERO SIEBEN, 29120 Pont L'Abbe (FR)
(72) Inventor: Le Dreau, Roger Chamberlin, 29120 PONT L'ABBE (FR)
(74) Representative: Regimbeau

(57) **Abstract**

The present invention relates to a process for preparing customized mineral water, comprising the following successive steps:
a) desalination of natural sea water to produce a demineralized water and a brine,
b) electrolysis of the brine obtained at step a),
c) remineralization of the demineralized sea water with the brine obtained at step b) to produce a customized mineral water.

The present invention also relates to the customized mineral water obtainable by the process as described above and the uses thereof.

## Description

### Field of the invention

The present invention relates to a process for preparing customized mineral water, in which the mineral concentration and/or the pH is(are) adapted to the needs of the consumer.

### Background of the invention

In 2021, more than 580 billions of bottles of mineral water are bottled, produced and consumed in the world. This mineral water comes essentially from underground water tables. However, years of agricultural production and unrestrained use of pesticides have considerably harmed the quality of the underground water tables from which spring water is extracted. Indeed, according to recent analysis, underground water is increasingly loaded with nitrates and pesticides, resulting in excessive treatment costs to make it safe for consumption.

Nevertheless, the health benefits of mineral waters are widely recognized, due to the presence of certain minerals essential to our physiological needs.

Alternatives have therefore been developed for obtaining mineralized water without using groundwater, for example by starting from an inexhaustible source such as sea water. Sea water is of course unfit for consumption. Desalination processes have been set up, particularly in certain hot countries such as Israel where spring water is scarce, to serve as drinking water after a slight remineralization. 98% of the market is dominated by reverse osmosis technology. Other techniques include mechanical vapor-compression (MVC), multiple-effect distillation (MED), nano-filtration and multi-flash distillation (MSF).

In order to remineralize the desalinated sea water, it is generally simply circulated through calcite tubes. However, such a process does not permit to control precisely the concentration of each mineral present in the water.

It could be advantageous to adapt the nature and the concentration of minerals in water to the different needs of the consumer.

There is thus a need for a process enabling to prepare a mineral water in which mineral concentration is specifically adapted to a particular use. The inventors have thus developed a process with the advantage of producing a mineral water having a customized concentration in minerals which meets the physiological needs of the consumer, such as the specific needs of pregnant women, infants or athletes. The minerals may also be particularly adapted to fight against hypertension or arthritis. It could also be suitable to prepare mineral waters specifically adapted for master cooking, for luxury bath salt solutions or for optimal watering of certain vegetals.

The process developed by the inventors has also the advantage of valorizing the brine obtained at the first step of the process. Such a reuse avoids the need to buy salts from quarries.

### Summary of the invention

According to a first aspect, the present invention relates to a process for preparing customized mineral water, comprising the following successive steps:
a) desalination of natural sea water to produce a demineralized water and a brine,
b) electrolysis of the brine obtained at step a),
c) remineralization of the demineralized sea water with the brine obtained at step b) to produce a customized mineral water.

### Detailed description

In the context invention, the terms « desalination » and « demineralization » are synonymous and refer to the process of removing totally or in part the minerals present in natural sea water.

The term « brine » refers to an aqueous solution comprising a concentration in minerals higher than sea water.

The terms « mineral » and « mineral salt » are interchangeable, in the context of the present invention. In water, the minerals are in the form of ions.

The term « mineral concentration » refers to the total concentration of minerals present in the brine or in the water, without distinction between the species.

In the context of the present invention, the term « customized mineral water » means that the mineral water obtained at the end of the process of the invention has a concentration in one or more minerals and/or a pH corresponding to a predetermined value. By « predetermined value », it is referred to a specific value or a range.

In accordance with WHO recommendations, the customized mineral water notably comprises:
- calcium,
- magnesium,
- carbohydrates,
- sodium, and
- sulfates.

Nevertheless, while remaining in the authorized concentration ranges of each mineral, the concentration of one or more mineral(s) in the customized mineral water may be predetermined. The process of the invention is thus adapted, as described hereafter, so as the resulting customized mineral water complies with this predetermined value. The mineral of which the concentration is predetermined is not necessarily a mineral which is mandatory present in a mineral water according to the regulation. It could be another mineral optionally present in a mineral water, provided that it is safe for consumption.

Alternatively, or in addition of the predetermined concentration of one or more minerals in the water, the pH of the resulting customized mineral water may also be predetermined. The process of the invention is thus adapted, as described hereafter, so as the resulting customized mineral water complies with this predetermined value. This predetermined value is comprised in a pH range suitable for the water to be safe for consumption.

According to the regulation, the World Health Organization recommend that pH of the customized mineral water of the invention is comprised between 6.5 and 9.5.

### Step a) : desalination of natural sea water

In natural sea water useful in the present invention, the mineral concentration typically ranges from 2 to 4% by weight, notably from 3 to 4%.

The step of desalination of natural sea water may be carried out by using methods well-known from the skilled person. In particular, the step of desalination uses membrane processes, for example as described hereafter.

Advantageously, the step of desalination comprises the following sub-steps :
a1) a first separation step of minerals from water by using reverse osmosis to afford demineralized water and a first brine,
a2) a second separation step of the first brine obtained at step a1 by nanofiltration to produce demineralized water and a second brine.

### • Step a1

Reverse osmosis is a very common in the state of the art, uses a semi-permeable membrane to achieve the separation of water from the minerals. By applying a pressure higher than the osmotic pressure to a concentrate medium (such as sea water), the pure solvent (here demineralized water) is allowed to pass to the other side of the membrane (the less concentrate medium) while the solute (minerals) is retained on the pressurized side. The hydrostatic pressure requirements of reverse osmosis can make reverse osmosis energetically expensive.

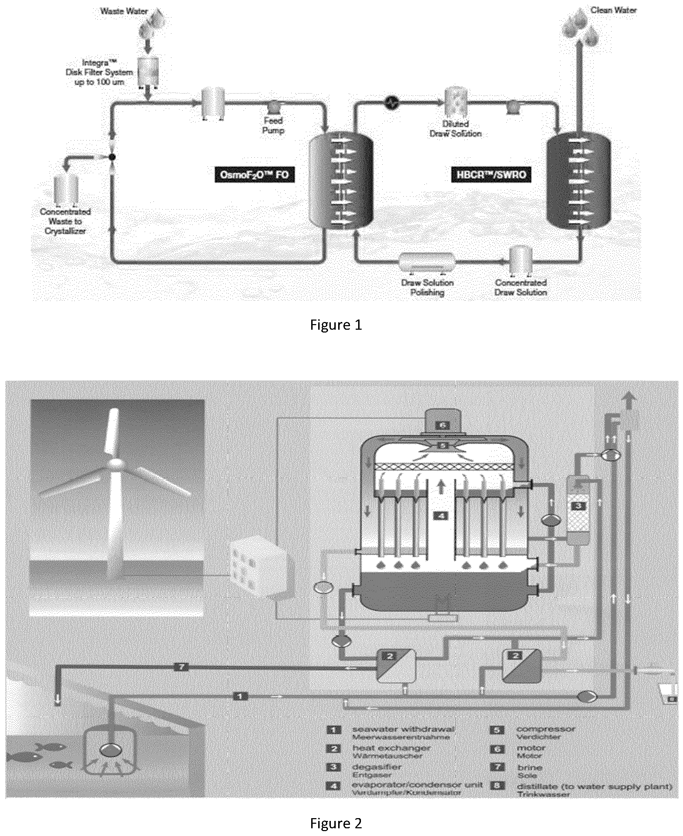

Systems have thus been developed for reducing the energy costs or increasing the efficiency of reverse osmosis systems. According to a particular embodiment, the reverse osmosis used at step a1) is osmotically assisted reverse osmosis (OARO) which use energy transfer engine to recycle energy from first step to the next steps. Preferably, the OARO device comprises an energy transfer system at the input and output of each membrane block for saving energy. For example, by using the OARO system, step A1 needs 6,4 kWh to recover 50% of the permeate water, and then the system re-use part of the initial energy so that step a2 only need 0,5 kWh to recover additional 20% of permeate. The OARO system used in the present invention is illustrated in Figure 1. The OARO process is notably carried out by using the device of Osmotically Assisted Revert Osmosis provided by Fluid Technology Solutions (FTS), Inc.

After step a1, the first brine has a mineral concentration typically ranging from 5% to 20% by weight, preferably from 5% to 12% by weight, more preferably from 5% to 10,5% by weight, relative to the total weight of the brine. In other terms, after step a1, the first brine has a mineral dry residue concentration typically ranging from 50 g/L to 200 g/L, preferably from 50 g/L to 120 g/L, more preferably from 50 g/L to 105 g/L.

Step a1 may be repeated one or more time, preferably once, in order to increase the mineral concentration in brine in the above recited ranges.

In particular, after step a1, from 40% to 95% by weight, preferably from 50% to 90%, more preferably from 50% to 85% by weight, of demineralized water is recovered, relative to the total weight of the natural sea water introduced in the system of separation.

According to some embodiments, the pH of the demineralized water recovered at the end of step a1 ranges from 5 to 9, preferably from 7 to 8.5, more preferably from 7.5 to 8.5, even more preferably pH is 8.

### • Step a2

The first brine recovered after step a1) then undergoes a nanofiltration. This technique is also well-known from the skilled person in the art. It uses a membrane having nanometer size through-pores, typically ranging from 1 to 10 nanometers.

This step of nanofiltration enables to further concentrate the brine obtained at step a1, i.e. to increase the mineral concentration in the brine.

After step a2, the second brine has a mineral concentration typically ranging from 5% to 30% by weight, notably from 5% to 20% by weight, in particular from 5% to 15% by weight, relative to the total weight of the brine. In other terms, after step a2, the second brine has a mineral dry residue concentration typically ranging from 50 g/L to 300 g/L, notably from 50 g/L to 200 g/L, in particular from 50 g/L to 150 g/L.

Step a2 may be repeated at least once in order to further concentrate the brine. In particular, step a2 may be repeated if the mineral concentration in the second brine at the end of the first step a2 is higher than 12% by weight, relative to the total weight of the brine.

Therefore, advantageously, step a2 is repeated until the mineral concentration in the brine is of at least 12% by weight, preferably of at least 14% by weight, more preferably of at least 18% by weight, relative to the total weight of the brine.

Step a2 is preferably repeated once.

At the end of step a), the brine has a mineral concentration typically ranging from 12% to 30% by weight, relative to the total weight of the brine.

The brine obtained after step a) of the present invention is deprived of any chemical polluent. On the contrary of brines obtained by conventional demineralization processes which use many polluting chemical products such as phosphoric or sulfuric acid.

The demineralized waters obtained at the end of steps a1) and a2) are preferably combined together to form one batch.

In particular, after step a), from 40% to 95% by weight, preferably from 50% to 90%, more preferably from 50% to 85% by weight, of demineralized water is recovered, relative to the total weight of the natural sea water introduced in the system of separation.

The demineralized water obtained at the end of step a) has preferably a pH ranging from 5 to 9, notably from 5.5 to 7.5 and a mineral concentration ranging from 0.005wt% to 0.05 wt%, preferably from 0.008 wt% to 0.02 wt%, relative to the weight of the water.

The brine obtained at the end of step a) comprises at least the following minerals, under the form of ions : chlorides (Cl⁻), sulfates (SO₄²⁻), carbonates (CO₄²⁻), hydrocarbonates (HCO₃⁻), bromide (Br⁻), fluoride (F⁻), hydroxide (HO⁻), iodide (I⁻), sodium (Na⁺), magnesium (Mg²⁺), Calcium (C²⁺), potassium (K⁺), strontium (Sr²⁺), lithium (Li⁺), rubidium (Rb²⁺), baryum (Ba²⁺) and iron (Fe²⁺ and/or Fe³⁺), boron (B³⁺).

Chlorides and sodium are preferably at a concentration of less than 100 mg/L. In particular, chlorides are at a concentration of less than 80 mg/L and sodium is at a concentration of less than 50 mg/L. The other ions are preferably each at a concentration of less than 2 mg/L.

According to another variant of the invention, the step a) of desalination corresponds to step a'1) of separating minerals from water by evaporation using the mechanical vapor compression system (MVC).

The mechanical vapor compression is a distillation process well-known in the art in which sea water is evaporated by application of heat delivered by compressed vapor. An illustration of the MVC system used in the present invention is provided at Figure 2.

At the end of step a'1), the brine has a mineral concentration typically ranging from 5% to 20% by weight, relative to the total weight of the brine, preferably from 8% to 12%.

The brine obtained after step a'1) of the present invention is deprived of any chemical polluent. On the contrary of brines obtained by conventional demineralization processes which use many polluting chemical products such as phosphoric or sulfuric acid.

In particular, after step a'1), from 50% to 95% by weight, preferably from 60% to 95%, more preferably from 70% to 90% by weight, of demineralized water is recovered, relative to the total weight of the natural sea water introduced in the system of separation.

The demineralized water obtained at the end of step a'1) has preferably a pH ranging from 5 to 8.5, notably from 5.5 to 7.5 and a mineral concentration ranging from 0.005wt% to 0.05 wt%, preferably from 0.008 wt% to 0.02 wt%, relative to the weight of the water.

The brine obtained at the end of step a'1) comprises same minerals as in brine obtained at the end of step a) described above.

According to a preferred embodiment, the process comprises a preliminary step of pre-treatment of the sea water which takes place before step a) or a'1). The pre-treatment is typically carried out by passing the sea water through a filter, such as a sand filter, a charcoal filter, or by achieving disinfection with UV rays.

### Step b) : Electrolysis of brine

When steps a1) and a2) or a'1) are carried out, step b) is typically achieved at the end of step a2) or a'1).

The electrolysis of the brine enables to specifically increase the concentration of one or more mineral(s) chosen from : chlorides (Cl⁻), sulfates (SO₄²⁻), carbonates (CO₄²⁻), hydrocarbonates (HCO₃⁻),bromide (Br⁻), fluoride (F⁻), hydroxide (HO⁻), iodide (I⁻), sodium (Na⁺), magnesium (Mg²⁺), calcium (C²⁺), potassium (K⁺), strontium (Sr²⁺), lithium (Li⁺), rubidium (Rb²⁺), baryum (Ba²⁺) and iron (Fe²⁺ and/or Fe³⁺).

According to a particular embodiment, the electrolysis of the brine leads to the extraction of one or more mineral(s), preferably one or two, chosen from : chlorides (Cl⁻), sulfates (SO₄²⁻), carbonates (CO₄²⁻), hydrocarbonates (HCO₃⁻), bromide (Br⁻), fluoride (F⁻), hydroxide (HO⁻), iodide (I⁻), sodium (Na⁺), magnesium (Mg²⁺), calcium (C²⁺), potassium (K⁺), strontium (Sr²⁺), lithium (Li⁺), rubidium (Rb²⁺), baryum (Ba²⁺) and iron (Fe²⁺ and/or Fe³⁺). It means that at the end of the electrolysis, the brine essentially comprises the mineral(s) extracted, the other minerals being absent or in an amount too small to be quantified.

Typically, the electrolysis of the brine leads to the extraction of one or more mineral(s), preferably one or two, chosen from : chlorides (Cl⁻), sulfates (SO₄²⁻), carbonates (CO₄²⁻), hydrocarbonates (HCO₃⁻), sodium (Na⁺), magnesium (Mg²⁺), calcium (C²⁺) and potassium (K⁺).

In particular, it leads to the extraction of hydrocarbonates (HCO₃⁻), magnesium (Mg²⁺) and calcium (C²⁺).

The mineral(s) for which the concentration is increased in the brine or which is(are) extracted from the brine correspond(s) to the one(those) for which the concentration in the final customized mineral water is predetermined.

The electrolysis is achieved according to methods well-known from the skilled person in the art, In particular, the electrolysis module is a high concentrated brine (HBC) eletrodialysis. The electrolysis module used in the present invention preferably has the following features:
- an active membrane area 0,15 m² per cell
- an electrical current density of more than 2500 A/m²
- a very high velocity in electrolyte flow and low pressure loss
- a supply with unfiltrated feed and suspended matter possible
- an equal feed distribution in cell and on membrane surface.

According to a preferred embodiment, the process also comprises a step b') which takes place between step a) and step b) or simultaneously to step b) in which the demineralized water obtained at step a) is passed through calcite pipes. This step b') enables to increase the pH of the demineralized water and/or to increase the mineral concentrations.

At the end of step b'), the demineralized water has typically a pH ranging from 5 to 9 and a mineral concentration ranging from 0.005wt% to 0.05 wt%, preferably from 0.008 wt% to 0.02 wt%, relative to the weight of the water.

### Step c) : Remineralization of demineralized sea water

In step c), the demineralized water obtained after step a) or step b') or a mixture of these two demineralized waters, is remineralized by using the brine obtained after step b).

According to a preferred embodiment, the demineralized water is introduced into a mineralization vat. The brine obtained at step b) is then added to the mineralization vat.

After step c), the customized mineral water has advantageously a mineral concentration and/or a pH corresponding to a predetermined value. Preferably, the customized mineral water has a concentration of one or more specific minerals, for example a concentration of one or two specific mineral(s), corresponding to a predetermined value.

The predetermined value of minerals concentration to be reached depends of the intended use of the customized water. It may be any value provided that the water remains suitable for the intended use, for example for human consumption.

According to a preferred embodiment, the customized mineral water has a concentration of one or more specific minerals, for example a concentration of one or two specific mineral(s), which is specifically adjusted so that the customized mineral water has a pH corresponding to a predetermined value. The pH of the customized predetermined value is typically ranging from 6.5 to 9.5, preferably from 8 to 9.5.

In particular, in the customized mineral water obtained by the process of the invention, the predetermined concentration of one or more mineral(s) is higher than the concentration of this mineral in the natural sea water starting from which the process begins.

The composition of the brine and the conditions under which the brine is added to the mineralization vat are adapted so that the customized mineral water has a concentration in one or more mineral(s) and/or a pH corresponding to the predetermined value. The conditions relative to the additions of the brine to the mineralization vat advantageously correspond to the amount of brine, the flow, the temperature and the pression. These conditions are easily configured by the skilled person seeking to reach the predetermined value.

According to a preferred embodiment, the process of the invention comprises a subsequent step d) of treatment of the customized mineral water. Step d) is carried out after step c). This step aims in particular at removing micro-organisms from the water to be safe for consumption. Step d) is preferably achieved by injection of carbon dioxide and/or ozone in the customized mineral water. The injection of CO2 is suitable to acidify the remineralized water to a pH ranging from 7 to 9 if needed, to limit the bacterial proliferation and/or to produce sparkling water.

Advantageously, step d) comprises the following sub-steps :
d1) injection of CO₂ into the customized mineral water,
d2) ozonisation of the customized mineral water.

The ozonisation is typically carried out by passing the customized mineral water in an ozonisation device.

According to another preferred embodiment, the process of the invention comprises a last a step e) of conditioning the customized mineral water. Step e) may be carried out after step c) or d). Step e) is notably carried out after step d), in particular when customized mineral water is intended for human consumption.

The customized mineral water is preferably conditioned in bottles such as bottles in glass, in metal, in plastic or in cardboard, more preferably in cardboard. Bottles in cardboard are generally safer for the consumer and the environment and they are isothermic, preventing the warming of the water.

### The customized mineral water and their uses

According to another aspect, the present invention relates to the customized mineral water obtained or obtainable by the process of the invention.

The customized mineral water is mainly intended for consumption.

According to another aspect, the present invention relates to the use of the customized mineral water as an additive for the food industry, for the crop industry, for the cosmetic industry or for swimming-pools.

For example, the customized mineral water having a specific mineral(s) concentration and/or pH may be beneficial for the growth of some plants. In another example, the customized mineral water may have a specific mineral(s) concentration and/or pH particularly suitable to be integrated to a parfum or a cream intended to be applied on skin.
the customized mineral water obtained by the process of the invention may be infused or perfumed with flavors to obtained aromatized water. For example, they may be infused with agrums, hibiscus flowers, fruits as red fruit or spices.

### FIGURES

**Figure 1****:** schema of the osmotically assisted reverse osmosis (OARO) system used in the present invention.
**Figure 2****:** schema of the mechanical vapor compression system used in the present invention.

### EXAMPLES

### Example 1 : Maï Alcaline Water pH 8.88+ using both technologies: OARO and MVC

### OARO

Step a1: Seawater input salinity is 35g/L. Seawater goes throughout the filtration pipes at 2,57bars pressure, Reverse Osmosis membranes requiring 5KwH. Recover 51% of demineralised water and 49% of brine concentrated at 70g.
Step a2 :, The brine obtained at step a1 brine goes to nanofiltration and recover between 12 and 17% of demineralized water.
Step a2 bis : a second nanofiltration allows recovering up to 15% of demineralized water and a brine with salinity as high as 170g/liter.

Once the tank of demineralized water is full, an alarm will set the start of remineralisation pump with parameters below :

| Inflow | 2 | m3/h |
|---|---|---|
| diameter of the filter | 900 | mm |
| Height of calcite in the column | 600 | mm |
| velocity | 3 | m/h |
| filtration area | 0,636 | m2 |
| CO2 | 18 | L/min |
| Hardness | 40 | ppm CaCO3 |
| added calcite | 34,7 | ppm CaCO3 |
| dissolved calcite | 38,0 | ppm CaCO3 |

Water analysis:

| | 20ºC | |
|---|---|---|
| | Permeate (ppm) | Remineralized water (after electrolysis) (ppm) |
| Conductivity(µS/cm) | 217,0 | 275 |
| Total mineral dry residue | 129,9 | 165 |
| pH | 6 | 8,88 - 9,3 |
| Calcium (Ca) | 0,5 | 14,4 |
| Magnesium (Mg) | 1 | 1 |
| Bicarbonate (HCO3) | 10 | 31 |
| Sodium (Na) | 46,3 | 46,3 |
| CO2 | 2 | 0 |
| Hardness, in CaCO3 | 5,4 | 40,0 |
| Hardness, D | 0,30 | 2,25 |
| Total Alcalinity, en °F | 0,820 | |

As the output of the remineralization system, we do pass the water is passed through ozonation system to kill eventual bacteries as per Health authorities' regulation, water has a pH ranging from 8,88 to 9,3.

### Thermal MVC

Step a'1): Seawater intake 7 cubic/h boiled at 90°C and the pressure under the boiler goes up to 10 bars. The pipes above the boiler do recover the condensate which will fill the distilled water tank.
Step b) and c) The tank of distillated water will go through the pipes of remineralization with concentrated of brine or lime extracted from brine coming out of the boiling process with stable value of calcium, magnesium and carbohydrates highly concentrated throughout multiple precipitations of non-polluted brine.

Water analyses confirm a less than 2,5% discrepancy data from the above data coming out of the remineralisation system with OARO technology.

## Claims

1. A process for preparing customized mineral water, comprising the following successive steps:
a) desalination of natural sea water to produce a demineralized water and a brine,
b) electrolysis of the brine obtained at step a),
c) remineralization of the demineralized sea water with the brine obtained at step b) to produce a customized mineral water.

2. The process of claim 1, **characterized in that** step a) comprises the following sub-steps :
a1) a first separation step of minerals from natural sea water by using reverse osmosis to produce demineralized water and a first brine,
a2) a second separation step of the first brine obtained at step a1 by nanofiltration to produce demineralized water and a second brine.

3. The process of claim 2, **characterized in that** reverse osmosis is osmotically assisted reverse osmosis.

4. The process according to any of claims 1 to 3, **characterized in that** the brine obtained at the end of step a) has a mineral concentration ranging from 12% to 30% by weight, relative to the total weight of the brine.

5. The process of claim 1, **characterized in that** step a) corresponds to step a'1) of separating minerals from water by evaporation using the mechanical vapor compression system (MVC).

6. The process according to any of claims 1 to 5, **characterized in that** the brine obtained after step a) is deprived of any chemical polluent.

7. The process according to any of claims 1 to 6, **characterized in that**, at the end of step b), the brine essentially comprises one or more mineral(s) chosen from : chlorides (Cl⁻), sulfates (SO₄²⁻), carbonates (CO₄²⁻), hydrocarbonates (HCO₃⁻), bromide (Br⁻), fluoride (F⁻), hydroxide (HO⁻), iodide (I⁻), sodium (Na⁺), magnesium (Mg²⁺), calcium (C²⁺), potassium (K⁺), strontium (Sr²⁺), lithium (Li⁺), rubidium (Rb²⁺), baryum (Ba²⁺) and iron (Fe²⁺ and/or Fe³⁺).

8. The process according to any of claims 1 to 7, **characterized in that** the customized mineral water has a mineral concentration and/or a pH corresponding to a predetermined value.

9. The process according to any of claims 1 to 8, **characterized in that** the customized mineral water has a concentration of one or more specific minerals corresponding to a predetermined value.

10. The process according to any of claims 1 to 9, **characterized in that** a step d) of treatment of the customized mineral water is carried out after step c).

11. The process according to claim 10, **characterized in that** step d) comprises the following sub-steps:
d1) injection of CO₂ into the customized mineral water,
d2) ozonisation of the customized mineral water.

12. The process according to any of claims 1 to 11, **characterized in that** a step e) of conditioning the customized mineral water is carried out after step c) or d).

13. The process according to claim 12, **characterized in that** the customized mineral water is conditioned in bottles, advantageously in cardboard.

14. The customized mineral water obtainable by the process of claims 1 to 13.

15. The use of the customized mineral water of claim 14 as additive for the food industry, for the crop industry, for the cosmetic industry or for swimming-pools.
